# EUROPÄISCHE PATENTSCHRIFT

(11) **EP 1 063 633 B1**
(45) Veröffentlichungstag und Bekanntmachung des Hinweises auf die Patenterteilung: **01.08.2007**
(21) Anmeldenummer: 00202143.4
(22) Anmeldetag: 19.06.2000
(51) Int. Cl.: G10L 15/06

(54) **Verfahren zum Training eines automatischen Spracherkenners**
Method of training an automatic speech recognizer
Procédé d'apprentissage d'un dispositif de reconnaissance vocale automatique

(30) Priorität: 26.06.1999 DE 19929462
(43) Veröffentlichungstag der Anmeldung: 27.12.2000
(73) Patentinhaber: Philips Intellectual Property & Standards GmbH, 20099 Hamburg (DE); Koninklijke Philips Electronics N.V., 5621 BA Eindhoven (NL)
(72) Erfinder: Rose, Georg, Habsburgerallee 11, 52064 Aachen (DE); Eggen, Josephus Hubertus, Habsburgerallee 11, 52064 Aachen (DE); van de Sluis, Richard, Habsburgerallee 11, 52064 Aachen (DE)
(74) Vertreter: Volmer, Georg

(56) Entgegenhaltungen:
- EP-A- 0 327 408
- EP-A- 0 867 857

## Beschreibung

Die Erfindung betrifft ein Verfahren zum Training eines automatischen Spracherkenners.

Automatische Spracherkenner basieren einerseits auf akustischen Modellen und andererseits gegebenenfalls auch - wie bei sprecherunabhängigen Diktiersystemen üblich - auf Sprachmodellen. Bei der akustischen Modellierung werden üblicherweise sogenannte HMM (Hidden Markov Models) eingesetzt, deren Modellparameter für den jeweiligen Anwendungsfall zu bestimmen sind. So sind für jedes HMM insbesondere Übergangswahrscheinlichkeiten und Ausgabewahrscheinlichkeitsfunktionen zu ermitteln. Die HMM-Parameter werden üblicherweise in einer Trainingsphase vor der eigentlichen Spracherkennerinbetriebnahme initialisiert. Während des Spracherkennerbetriebs eingegebene Sprachdaten werden danach häufig noch zur Adaption des Spracherkenners, insbesondere auf einen bestimmten Sprecher oder auf bestimmte Hintergrundgeräusche, eingesetzt, um die akustischen Modelle weiter zu verbessern.

In der Trainingsphase eines Spracherkenners wird ein Benutzer vom Spracherkennungssystem zur Eingabe von vorgegebenen Sprachäußerungen aufgefordert, die beispielsweise bei Verwendung eines sprecherabhängigen Spracherkenners vom Benutzer normalerweise mehrfach gesprochen werden müssen. Die eingegebenen Sprachäußerungen werden ausgewertet und die zugehörigen HMM entsprechend bestimmt. Die Trainingsphase erstreckt sich regelmäßig über eine längere Zeitdauer, kann mehrere Stunden dauern und wird von einem Benutzer häufig als lästig, langweilig und/oder ermüdend empfunden

Aus EP 0 867 857 A2 ist ein computer-implementiertes Verfahren bekannt, mit dem sich ein Benutzer bei einem Spracherkennungssystem durch Analyse des akustischen Inhalts einer Benutzeräußerung anmelden kann. Gemäß dem beschriebenen Verfahren wird basierend auf dieser Analyse bestimmt, ob die Benutzeräußerung mit einem Teil des Anmeldetextes übereinstimmt, und die Benutzeräußerung zum Update des akustischen Models, das zu diesem Teil des Anmeldetextes gehört, verwendet, wenn die Benutzeräußerung mit dem Teil des Anmeldetextes übereinstimmt. Die akustischen Modelle umfassen in der Regel Daten, welche die Art und Weise beschreiben, wie bestimmte Spracheinheiten (sog. Phoneme) von verschiedenen Sprechern ausgesprochen werden. Zur Erhöhung der Genauigkeit, mit der ein akustisches Model die Sprache eines bestimmten Nutzers darstellt, kann das Spracherkennungssystem das akustische Model derart ändern, dass es an die Sprache des bestimmten Nutzers angepasst wird. Eine solche Anpassung kann auf Sprachäußerungen des Benutzers basieren, die während einer Initialisierungsphase des Spracherkenners und während des Betriebes des System erhalten werden.

Der Erfindung liegt die Aufgabe zugrunde, das Training für den Benutzer angenehmer auszugestalten.

Die Aufgabe wird durch ein Verfahren mit den Merkmalen des Anspruch 1 und weiterhin durch ein Spracherkennungssystem nach Anspruch 6 gelöst.

Ein Spiel stellt für sich allein betrachtet eine unterhaltende Beschäftigung nach bestimmten Regeln dar, die grundsätzlich aus Freude an ihr selbst (Zeitvertreib, Kurzweil) erfolgt. Durch Einbindung eines Spiels in ein Spracherkennertraining wird der Benutzer einerseits unterhalten und parallel dazu werden Spracheingaben eines Benutzers bewirkt, die automatisch zur Modellierung von im Spracherkenner verwendeten Modellen (insbesondere HMM-Modellen) verwendet werden. Dabei werden dem Benutzer in den einzelnen Spielphasen Sprachäußerungen, d.h. Worte, Wortbestandteile oder auch Wortkombinationen insbesondere durch visuelles Anzeigen vorgegeben, um diesen zu veranlassen, die ihm vorgegebenen Sprachäußerungen dann tatsächlich zu tätigen und in das Spracherkennungssystem einzugeben. Grundsätzlich möglich ist aber auch, daß der Benutzer durch akustische Ausgaben (anstelle von visuell angezeigten Ausgaben) zur Eingabe bestimmter Sprachäußerungen aufgefordert wird.

In einer Ausgestaltung der Erfindung ist vorgesehen, daß dem Benutzer mindestens eine erste Sprachäußerung angezeigt wird, auf die der Spracherkenner bereits trainiert ist, und daß dem Spracherkenner außerdem eine weitere Sprachäußerung angezeigt wird, auf die der Spracherkenner noch zu trainieren ist. Dies ist vor allem für sprecherabhängige Spracherkenner mit kleinem Vokabular ein vorteilhaftes Verfahren. Sukzessive (Wort für Wort) wird hier die Menge an trainierten Worten erweitert. Der Spracherkenner erkennt dabei eine eingegebene Sprachäußerung entweder als bereits trainiertes Wort oder als unbekanntes Wort, daß in der jeweiligen Spielphase gerade zu trainieren ist. Für das zu trainierende Wort können dabei sowohl die optimale Anzahl HMM-Zustände werden als auch die zugehörigen HMM-Parameter ermittelt werden. Als Erfindungsvarinante wird hierzu vorgeschlagen, daß die dem Benutzer vorgegebenen Sprachäußerungen Markierungen für zugeordnete Bildschirmbereiche sind, die bei Eingabe der zugehörigen Sprachäußerung auf dem Bildschirm verschoben werden, um so als Ziel eine vorgebbare Struktur auf dem Bildschirm zu erzeugen, die nach einem Erreichen des Ziels neu vorgegeben wird.

Eine andere Ausgestaltung der Erfindung beinhaltet, daß bei einer Eingabe einer Sprachäußerung, auf die der Spracherkenner schon trainiert ist, mittels dieser Spracheingabe eine Adaption des Spracherkenners durchgeführt wird. Damit werden auch Spracheingaben eines Benutzers, die sich auf eine schon trainierte Sprachäußerung beziehen, ausgenutzt, und zwar zur weiteren Verbesserung von zugehörigen HMM-Modellen, für die schon während einer Trainingsphase Parameterwerte ermittelt wurden.

Weiterhin kann die Erfindung dahingehend weitergebildet werden, daß die Einordnung einer Spracheingabe als für das Training zu verwendende Spracheingabe von einem für diese Spracheingabe zu ermittelndem Konfidenzmaß abhängt, das ein Maß dafür angibt, daß die vom Benutzer eingegebene Sprachäußerung einer vom Spracherkenner vorgegebenen Sprachäußerung entspricht. Damit kann es vermieden werden, daß ein Training aufgrund von vom Spracherkenner während der Trainingsphase empfangenen akustischen Signalen erfolgt, die nicht als für das Training geeignete Spracheingaben in Frage kommen. Beispielsweise kann so vermieden werden, daß ein Hintergrundgeräusch (z. B. das Öffnen oder Schließen einer Tür) zum Training des Spracherkenners verwendet wird. Anstelle einer Bewertung mit Konfidenzmaßen kann in einer anderen Ausgestaltungsvariante aber auch eine Bewertung mittels eines sogenannten "Garbage-Modeling" treten. Hierzu wird auf den Artikel "Robust Rejection Modeling for a Small-Vocabulary Application", D. Langmann, R. Haeb-Umbach, T. Eisele, S. Gamm, Proc. ITG-Fachtagung Sprachkommunikation, Frankfurt am Main, 17./18. September 1996, verwiesen.

Die Erfindung betrifft auch ein Verfahren zur Sprecheradaption eines automatischen Spracherkenners, bei dem einem Benutzer mittels eines Spiels Sprachäußerungen vorgegeben werden, die zur Adaption des Spracherkenners auf den Benutzer vorgesehen sind. Die Sprecheradaption ist insbesondere für sprecherunabhängige Spracherkennungssysteme - wie beispielsweise Diktiersystemen - vorgesehen. Die oben bezüglich eines Spracherkennertrainings genannten Ausgestaltungsvarianten lassen sich bei der Sprecheradaption entsprechend anwenden.

Die Erfindung betrifft auch ein Spracherkennungssystem zur Durchführung eines der oben beschriebenen Verfahren und ein elektrisches Gerät, insbesondere Gerät der Unterhaltungselektronik, mit einem derartig ausgestalteten Spracherkennungssystem. Ausführungsbeispiele der Erfindungen werden nachstehend anhand der Zeichnungen näher erläutert. Es zeigen:
- Fig. 1: ein Gerät mit einem erfindungsgemäßen Spracherkennungssystem und
- Fig. 2: ein das erfindungsgemäße Spracherkennertraining beschreibendes Flußdiagramm.

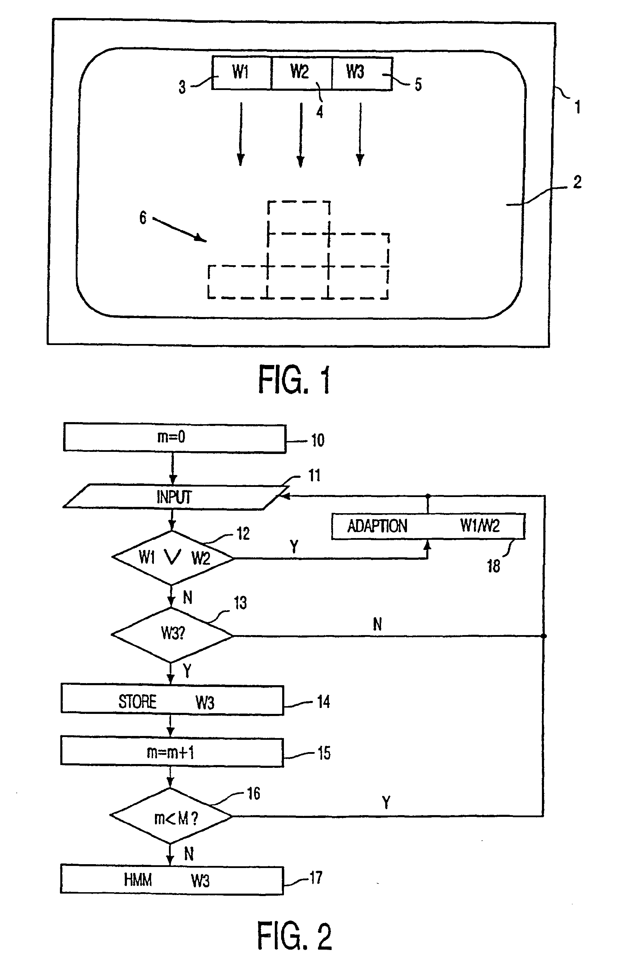

Das in Fig. 1 gezeigte elektrische Gerät 1, hier ein Gerät aus dem Bereich der Unterhaltungselektronik wie beispielsweise einem Fernsehgerät, weist einen nicht näher dargestellten und in üblicher Weise ausgeführten sprecherabhängigen automatischen Spracherkenner auf, mit dessen Hilfe Funktionen des Geräts 1 durch Spracheingaben steuerbar sind. Bei einem Fernsehgerät könnte beispielsweise die Videotext-Funktion unterstützt werden. Eine andere Anwendnung ist beispielsweise die Videorecorder-Programmierung. Um das im elektrischen Gerät 1 eingesetzte Spracherkennungssystem betriebsbereit zu machen, ist - wie bekannt - ein Spracherkennertraining durchzuführen. Zur Durchführung des Trainings werden in einer Trainingsphase an einen Benutzer Sprachäußerungen, hier die Worte W1, W2 und W3 ausgegeben, die zum Training des verwendeten Spracherkenners vorgesehen sind. Im vorliegenden Fall stellen die Worte W1 und W2 Worte dar, auf die der Spracherkenner schon trainiert ist. Auf das Wort W3 dagegen ist der Spracherkenner noch in dieser Trainingsphase zu trainieren, d.h. es sind noch Spracheingaben des jeweiligen Benutzers bezüglich des Wortes W3 erforderlich, um die dazugehörigen HMM-Parameterwerte und hier auch die notwendige Anzahl HMM-Zustände zu ermitteln. Bei dem hier zum Training verwendeten Computerspiel dienen die angezeigten Worte W1, W2 und W3 als Markierungen für zugeordnete Bildschirmbereiche 3, 4 und 5. Spricht der Benutzer das Wort W1 oder das Wort W2 aus, d.h. tätigt er entsprechende Spracheingaben, und werden diese dann vom im elektrischen Gerät 1 verwendeten Spracherkenner erkannt, so bewirkt dies, daß die dazugehörigen Bildschirmbereiche vom oberen Rand des Bildschirms 2 zum gegenüberliegenden unteren Rand des Bildschirms 2 verschoben werden. Ein mehrmaliges Erkennen eines vorgegebenen Wortes bewirkt, daß die zugehörigen Bildschirmbereiche in entsprechender Anzahl nebeneinanderliegend (hier übereinanderliegend) am unteren Rand des Bildschirms 2 sichtbar werden; die Bildschirmbereiche werden solange übereinandergestapelt, wie der Stapel noch innerhalb der Grenzen der vorgegebenen Struktur bleibt. Detektiert der Spracherkenner eine Spracheingabe und wird diese nicht als Wort W1 oder Wort W2 erkannt, wird diese Spracheingabe vom Spracherkenner als Eingabe des Wortes W3 interpretiert, es sei denn die Spracheingabe wird als nicht zum Training geeignet bewertet, wozu im vorliegenden Fall eine Wertung mittels eines Konfidenzmaßes eingesetzt wird. Ein geeignetes Konfidenzmaß läßt sich beispielsweise dem Artikel "Combination of Confidence Measures in Isolated Word Recognition", J.G.A. Dolfing, A. Wendemuth, ICSLP 1998, entnehmen. Das Spielziel ist im vorliegenden Fall, jeweils eine vorgebbare Struktur auf dem Bildschirm 2 zu erzeugen, die nach dem Erreichen dieses Ziels neu vorgegeben wird. Ein Beispiel für eine solche Struktur ist in Fig. 1 am unteren Rand des Bildschirms 2 gestrichelt eingezeichnet (Bezugszeichen 6). Wenn bezüglich des zu trainierenden Wortes W3 eine genügende Anzahl Spracheingaben getätigt wurden (unter Umständen nach mehrmaliger erneuter Vorgabe einer auf dem Bildschirm zu bildenden Struktur), wird auf dieser Grundlage das zum Wort W3 gehörige HMM geschätzt, d.h. es wird die HMM-Modellstruktur und der dazugehörige Parameterwertesatz ermittelt.

Das hier durchgeführte Training beginnt zunächst mit dem Training eines ersten Wortes, das vorzugsweise den Namen des Benutzers darstellt. Der Benutzer wird aufgefordert, seinen Namen über eine Tastatur einzugeben und ihn danach mehrmals als Spracheingabe in das System einzugeben, um auf dieser Grundlage ein erstes Wort zu trainieren. Als Alternative könnte das erste zu trainierende Wort auch als sprecherunabhängiges Wort mit entsprechender HMM-Modellbildung angesetzt werden. Nach dem Training eines ersten Wortes kann der Schatz an trainierten Worten danach sukzessive aufgebaut werden.

Die Durchführung des Trainings wird nun anhand des Flußdiagramms in Fig. 2 noch näher erläutert. Nach dem Start des Trainings bezüglich des Wortes W3, wobei eine Variable m auf den Wert Null gesetzt wird (Schritt 10) erfolgt im Schritt 11 die Eingabe einer Sprachäußerung durch den Benutzer. Wird in Schritt 12 die Spracheingabe als Wort W1 oder als Wort W2 erkannt, erfolgt eine Adaption (Schritt 18) des dazugehörigen HMM, die allerdings optional ist. Anschließend wird das Training mit Schritt 11 fortgesetzt. Wird in Schritt 12 die getätigte Spracheingabe nicht als Wort W1 oder Wort W2 erkannt, wird in Schritt 13 anhand einer Konfidenzmaßbewertung geschätzt, ob die getätigte Spracheingabe als Eingabe des Wortes W3 in Frage kommt. Ist dies nicht der Fall, folgt Schritt 11, ist dies der Fall, werden in Schritt 14 die entsprechenden zur getätigten Spracheingabe ermittelten und zum Wort W3 gehörigen Merkmalswerte gespeichert. Danach wird die Variable m um den Wert 1 inkrementiert (Schritt 15) woran sich in Schritt 16 die Abfrage anschließt, ob der Wert der Variablen m noch kleiner als eine vorgebbare Zahl M ist, die die erforderliche Anzahl Spracheingaben bezüglich des zu trainierenden Wortes W3 angibt. Ist der Wert von m in Schritt 16 noch kleiner als M, schließt sich Schritt 11 an. Anderenfalls werden die in Schritt 14 gespeicherten Merkmalswerte in Schritt 17 zur Schätzung des zum Wort W3 gehörigen HMM verwendet. M liegt vorzugsweise im Bereich von 3 bis 5, so daß unter der Voraussetzung einer zu bildenden Struktur 6 wie in Fig. 1 nach dem Erreichen der Struktur noch eine weitere Spielphase mit einem neuen Spielziel erforderlich ist, um eine HMM-Schätzung bezüglich des Wortes W3 durchführen zu können.

Das beschriebene Trainingsverfahren bezieht sich insbesondere auf sprecherabhängige Spracherkennungssysteme mit kleinem Vokabular. Der Einsatz eines (Computer-) Spiels kann aber insbesondere auch im Rahmen der Sprecheradaption (Adaption auf einen bestimmten Sprecher) von sprecherunabhängigen Systemen mit großem Vokabular, d.h. beispielsweise bei Diktiersystemen, erfolgen. Dabei werden schon trainierte HMM auf einen bestimmten Sprecher durch Modifikation entsprechender HMM-Parameter angepaßt. Die Spielversion gemäß Fig. 1 wäre dann insoweit anzupassen, als daß der Spracherkenner schon auf alle angezeigten Worte W1, W2 und W3 trainiert ist und daß bezüglich aller dieser Worte eine Sprecheradaption wie in Schritt 18 aus Fig. 2 vorgesehen ist.

## Patentansprüche

1. Verfahren zum Training eines automatischen Spracherkenners, der akustische Modelle und/oder Sprachmodelle verwendet, bei dem in einer Trainingsphase Sprachdaten gesammelt und zur Verbesserung der akustischen Modelle verwendet werden,
**dadurch gekennzeichnet,**
**dass** das Verfahren die folgende Schritte umfasst,
- Vorgeben von Sprachäußerungen (W1, W2, W3) an einen Benutzer während der Trainingsphase, die zum Training des Spracherkenners vorgesehen sind,
- Zuordnen der dem Benutzer vorgegebenen Sprachäußerungen (W1, W2, W3) zu Markierungen für Bildschirmbereiche (3, 4, 5),
- Eingeben der vorgegebenen Sprachäußerungen in den Spracherkenner durch den Benutzer, in beliebiger Reihenfolge,
- Verschieben der Markierungen (3, 4, 5) auf dem Bildschirm (2) bei Eingabe der zugehörigen Sprachäußerung, mit dem Ziel, eine vorgebbare Struktur (6) auf dem Bildschirm (2) zu erzeugen,
- Vorgeben einer neuen Struktur (6) nach Erreichen des Zieles.

2. Verfahren nach Anspruch 1,
**dadurch gekennzeichnet,**
**daß** dem Benutzer mindestens eine erste Sprachäußerung (W!, W2) angezeigt wird, auf die der Spracherkenner bereits trainiert ist, und daß dem Spracherkenner außerdem eine weitere Sprachäußerung (W3) angezeigt wird, auf die der Spracherkenner noch zu trainieren ist.

3. Verfahren nach einem der Ansprüche 1 bis 2,
**dadurch gekennzeichnet,**
**daß** bei einer Eingabe einer Sprachäußerung (W1, W2), auf die der Spracherkenner schon trainiert ist, mittels dieser Spracheingabe eine Adaption (18) des Spracherkenners durchgeführt wird.

4. Verfahren nach einem der Ansprüche 1 bis 3,
**dadurch gekennzeichnet,**
**daß** die Einordnung einer Spracheingabe als für das Training zu verwendende Spracheingabe von einem für diese Spracheingabe zu ermittelndem Konfidenzmaß abhängt, das ein Maß dafür angibt, daß die vom Benutzer eingegebene Sprachäußerung einer vom Spracherkenner während des Trainings vorgegebenen Sprachäußerung entspricht.

5. Verfahren nach einem der Ansprüche 1 bis 4 zur Sprecheradaption eines automatischen Spracherkenners,
**dadurch gekennzeichnet,**
**daß** einem Benutzer mittels eines Spiels Sprachäußerungen (W1, W2, W3) vorgegeben werden, die zur Adaption des Spracherkenners auf den Benutzer vorgesehen sind.

6. Spracherkennungssystem angepaßt zur Durchführung eines Verfahrens nach einem der Ansprüche 1 bis 5.

7. Elektrisches Gerät, insbesondere Gerät der Unterhaltungselektronik, mit einem Spracherkennungssystem nach Anspruchs 6.

## Claims

1. A method of training an automatic speech recognizer that uses acoustic models and/or speech models, in which method in a training phase speech data are collected and used for improving the acoustic models, **characterized in that** the method comprises the following steps:
- predefining speech utterances (W1, W2, W3) to a user during the training phase, which are provided to train the speech recognizer,
- assigning the speech utterances (W1, W2, W3) predefined to the user to marks for picture screen areas (3, 4, 5),
- entering the predefined speech utterances into the speech recognizer by the user in a random order,
- shifting the marks (3, 4, 5) on the picture screen (2) when the associated speech utterance is entered, with the oject of generating a predefinable structure (6) on the picture screen (2),
- predefining a new structure (6) after the object has been achieved.

2. A method as claimed in claim 1, **characterized in that** at least a first speech utterance (W1, W2) to which the speech recognizer has already been trained is shown to the user and **in that** furthermore a further speech utterance (W3) to which the speech recognizer is still to be trained is shown to the speech recognizer.

3. A method as claimed in one of the claims 1 to 2, **characterized**
**in that** when a speech utterance (W1, W2) to which the speech recognizer has already been trained is made, an adaptation (18) of the speech recognizer is effected by means of this speech utterance.

4. A method as claimed in any one of the claims 1 to 3, **characterized**
**in that** the classification of a speech input as a speech input to be used for the training depends on a confidence measure to be determined for this speech input, which confidence measure expresses the extent to which the speech utterance entered by the user corresponds to a speech utterance predefined by the speech recognizer during the training.

5. A method of speaker adaptation of an automatic speech recognizer as claimed in any one of the claims 1 to 4, **characterized in that** speech utterances (W1, W2, W3) are predefined for a user by means of a game, which speech utterances are provided for adapting the speech recognizer to the user.

6. A speech recognition system adapted for implementing a method as claimed in any one of the claims 1 to 5.

7. An electrical device, more particularly a home entertainment product including a speech recognition system as claimed in claim 6.

## Revendications

1. Procédé d'apprentissage d'un dispositif automatique de reconnaissance vocale qui utilise des modèles acoustiques et/ou des modèles vocaux, dans lequel des données vocales sont recueillies dans une phase d'apprentissage et utilisées pour l'amélioration des modèles acoustiques,
**caractérisé en ce que** le procédé comprend les étapes suivantes :
- détermination préalable d'expressions vocales (W1, W2, W3) à un utilisateur pendant la phase d'apprentissage, qui sont prévues pour l'apprentissage du dispositif de reconnaissance vocale;
- attribution des expressions vocales (W1, W2, W3) préalablement déterminées à l'utilisateur à des repères pour des zones d'écran (3, 4, 5).
- introduction des expressions vocales préalablement déterminées dans le dispositif de reconnaissance vocale par l'utilisateur dans un ordre quelconque;
- décalage des repères (3, 4, 5) à l'écran (2) en cas d'introduction de l'expression vocale correspondante, dans le but de produire une structure déterminable préalablement (6) à l'écran (2),
- détermination préalable d'une nouvelle structure (6) lorsque l'objectif est atteint.

2. Procédé selon la revendication 1,
**caractérisé en ce**
**qu'**il est indiqué à l'utilisateur au moins une expression vocale (W1, W2) dont le dispositif de reconnaissance vocale a déjà fait l'apprentissage et qu'une autre expression vocale (W3) dont le dispositif de reconnaissance vocale doit encore faire l'apprentissage est par ailleurs indiquée au dispositif de reconnaissance vocale.

3. Procédé selon l'une des revendications 1 à 2,
**caractérisé en ce**
**qu'**en cas d'introduction d'une expression vocale (W1, W2) dont le dispositif de reconnaissance vocale a déjà fait l'apprentissage, une adaptation (18) du dispositif de reconnaissance vocale est effectuée à l'aide de cette entrée vocale.

4. Procédé selon l'une des revendications 1 à 3,
**caractérisé en ce**
**que** la classification d'une entrée vocale comme entrée vocale a utiliser pour l'apprentissage dépend d'une mesure de confiance à déterminer pour cette entrée vocale qui indique une mesure que l'expression vocale introduite par l'utilisateur correspond à une expression vocale préalablement déterminée par le dispositif de reconnaissance vocale pendant l'apprentissage.

5. Procédé selon l'une des revendications 1 à 4 pour l'adaptation à l'orateur d'un dispositif automatique de reconnaissance vocale,
**caractérisé en ce que** des expressions vocales (W1, W2, W3) sont préalablement déterminées pour un utilisateur à l'aide d'un jeu et sont prévues pour l'adaptation du dispositif de reconnaissance vocale à l'utilisateur.

6. Système de reconnaissance vocale adapté en vue de la mise en oeuvre d'un procédé selon l'une des revendications 1 à 5.

7. Appareil électrique, en particulier appareil électronique de divertissement, avec un système de reconnaissance vocale selon la revendication 6
